# FASCICULE DE BREVET EUROPEEN

(11) **EP 4 153 514 B1**
(45) Date de publication et mention de la délivrance du brevet: **25.11.2026**
(21) Numéro de dépôt: 21732446.6
(22) Date de dépôt: 10.05.2021
(51) Int. Cl.: B65G 43/08, B25J 9/00, B65G 47/14, B65G 47/248, B67B 3/064, G06T 7/70

(54) **PROCÉDÉ AUTOMATISÉ DE DISTRIBUTION D'OBTURATEURS**
AUTOMATISIERTES VERFAHREN ZUR VERTEILUNG VON VERSCHLUSSELEMENTEN
AUTOMATED METHOD FOR DISTRIBUTING CLOSURE ELEMENTS

(30) Priorité: 19.05.2020 FR 2005094
(43) Date de publication de la demande: 29.03.2023
(73) Titulaire: ETABLISSEMENTS ANDRE ZALKIN ET CIE, 27390 Montreuil L'Argille (FR)
(72) Inventeur: STAELENS, Laurent, 27390 MONTREUIL L'ARGILLE (FR)
(74) Mandataire: Casalonga
(86) Numéro de dépôt international: PCT/FR2021/050799
(87) Numéro de publication internationale: WO 2021/234241

(56) Documents cités:
- WO-A1-2017/212896
- FR-A1- 2 997 927
- JP-A- S4 994 273
- US-A1- 2011 174 593
- US-A1- 2018 039 835
- US-A1- 2019 022 869
- US-B2- 8 360 230

## Description

La présente invention concerne le domaine des emballages, et plus particulièrement, les systèmes de distribution d'obturateurs pour flacons.

On peut citer non limitativement, comme obturateurs, les capsules en matière plastique ou des bouchons en liège. De façon générale, il s'agit de tout objet destiné à assurer la fermeture d'un récipient.

Ces obturateurs sont transportés à des moyens de vissage ou bouchage pour réaliser les différentes opérations nécessaires pour obtenir un produit fini tel qu'un flacon rempli et obturé.

Afin d'alimenter les moyens de vissage ou bouchage en obturateurs, ces derniers commencent par circuler sur un premier convoyeur, qui comprend, de façon classique, des trémies élévatrices aptes à transporter les obturateurs vers un convoyeur d'orientation destiné à les orienter et les distribuer à des moyens de transfert.

Plus particulièrement, les moyens de transfert sont aptes à transporter les obturateurs aux moyens de vissage ou bouchage et comportent généralement un ensemble d'alvéoles ou des pièges mécaniques, destinés à accueillir, dans chaque cavité, un obturateur.

Cela permet aux moyens de vissage ou bouchage de recevoir un nombre défini d'obturateurs sur lesquels ils effectuent des opérations telles que le vissage ou le bouchage de flacons.

Afin d'orienter les obturateurs, il a été développé des convoyeurs linéaires destinés à être alimentés en obturateurs.

De part et d'autre de ces convoyeurs, sont disposées des caméras assurant la détection des obturateurs transportés par les convoyeurs linéaires afin que des moyens de préhension puissent les saisir et les distribuer aux moyens de transfert.

Or, lorsque des obturateurs disposés sur les convoyeurs linéaires ne sont pas saisis, ils doivent de nouveau être détectés par les caméras.

Pour cela, des convoyeurs de recyclage sont utilisés afin de remettre les obturateurs non saisis dans la trémie élévatrice. L'encombrement de la ligne de transport s'en trouve augmenté.

Afin d'affranchir l'utilisation des convoyeurs de recyclage, les convoyeurs linéaires ont été remplacés par des convoyeurs rotatifs comprenant des tables tournantes, aptes également à assurer des cadences élevées.

Ainsi, les obturateurs non saisis restent disposés sur la table tournante jusqu'à leur distribution aux moyens de transfert.

Or, ces convoyeurs rotatifs sont conçus pour saisir des obturateurs ayant un unique format d'emballage défini préalablement à l'assemblage du convoyeur rotatif, le format correspondant aux dimensions de l'obturateur.

Autrement dit, ces convoyeurs rotatifs deviennent inopérationnels lorsque le format de l'obturateur change.

Plus particulièrement, la modification du format nécessite de réaliser de nouveaux essais et calculs sur le système, en laboratoire.

En effet, lorsqu'on change de format d'obturateur, il est nécessaire de changer la forme des moyens de transfert pour que ces derniers puissent accueillir des obturateurs dans chaque cavité.

Pour obtenir un format des moyens de transfert adapté au format des obturateurs, on doit réaliser de nouveau, en laboratoire, une série de calculs et d'essais qui permettent de déterminer une forme adéquate des moyens de transfert.

Par ailleurs, la forme ainsi déterminée est généralement uniquement adaptée à un format défini des obturateurs.

Ainsi, dès que le format de l'obturateur disposé sur le convoyeur rotatif change, il est nécessaire de retirer mécaniquement les moyens de transfert adaptés au format antérieur et de les remplacer par des moyens de transfert adaptés au nouveau format de l'obturateur, ce qui peut être lent et fastidieux à effectuer.

FR2997927A1 divulgue un procédé selon le préambule de la revendication 1, et un système selon le préambule de la revendication 7. Le but de l'invention est donc de pallier les inconvénients précités et de proposer un système automatisé de distribution d'obturateurs capable de s'adapter aux changements de format des obturateurs.

A cet effet, il est proposé un procédé automatisé de distribution d'obturateurs à des moyens de vissage et/ou bouchage, selon la revendication 1.

Le procédé comprend une alimentation d'une table tournante par une pluralité d'obturateurs disposés sur la table tournante, une détection du format de chaque obturateur disposé sur la table tournante et une préhension de chaque obturateur dont le format a été détecté pour le distribuer à des moyens de transfert aptes à transporter une pluralité d'obturateurs aux moyens de vissage et/ou bouchage.

Afin de transporter les obturateurs de formats différents aux moyens de vissage et/ou bouchage, les obturateurs sont d'abord disposés en vrac sur la table tournante.

La rotation de la table permet aux obturateurs d'être présentés, autant de fois que nécessaire, au système de vision, pour qu'il en détecte le format afin de pouvoir les distribuer à des moyens de transfert aptes à transporter une pluralité d'obturateurs aux moyens de vissage et/ou bouchage.

De même, lorsque des moyens de préhension sont en train de saisir et/ou de transporter des obturateurs, les autres obturateurs, disposés sur la table tournante, peuvent de nouveau être présentés aux moyens de préhension pour qu'ils puissent les saisir dès qu'ils seront libres.

Ainsi, une fois le format de l'obturateur détecté, les moyens de préhension exécutent des mouvements de translation et/ou de rotation afin de pouvoir saisir l'obturateur.

Avantageusement, le procédé comprend en outre une orientation des obturateurs disposés sur la table tournante selon un profil prédéfini.

Afin de saisir les obturateurs, il est avantageux qu'ils soient disposés sur la table tournante selon un profil particulier.

Par exemple, lorsqu'il s'agit de visser les obturateurs sur des flacons, il est avantageux d'orienter uniquement les obturateurs qui sont sensiblement orientés vers le sens inverse du vissage du flacon afin que chacun soit disposé dans une position indexée dans les moyens de transfert destinés à transporter lesdits obturateurs à une tourelle de vissage.

De préférence, on alimente la table tournante par la pluralité d'obturateurs lorsque le nombre d'obturateurs disposés sur au moins une surface de la table tournante est inférieur à un seuil prédéterminé.

Afin de maintenir un taux de chargement constant d'obturateurs sur la table tournante, les obturateurs détectés sont comptabilisés et si le nombre d'obturateurs est inférieur à seuil prédéterminé, par exemple 30% du nombre d'obturateurs que la surface totale de la table est apte à accueillir, on alimente de nouveau la table tournante par une pluralité d'obturateurs, par exemple jusqu'à obtenir par exemple un taux de chargement de 70%.

On peut également entendre par « seuil prédéterminé », un nombre d'obturateurs défini selon une surface spécifique de la table tournante.

Ainsi, il s'agit dans cet exemple d'un nombre d'obturateurs inférieur de 30% à celui qu'une surface déterminée de la table tournante est apte à accueillir, les surfaces de la table tournante étant réparties de manière homogène.

En variante, on alimente la table tournante par une pluralité d'obturateurs lorsque la surface cumulée par les obturateurs disposés sur au moins une surface de la table tournante, est inférieure à un seuil prédéterminé.

Cela permet, lorsqu'une pluralité d'obturateurs sont proches les uns des autres et donc difficilement délimitables, de pouvoir déterminer le taux de remplissage d'une surface de la table tournante par les obturateurs.

A titre d'exemple, en mesurant la surface des obturateurs disposés dans une surface délimitée de la table tournante, grâce à leur couleur, on détermine le taux de remplissage de la table tournante en comparant la surface cumulée par les obturateurs à une valeur seuil.

Autrement dit, lorsque la surface mesurée est par exemple inférieure de 30% à la surface délimitée de la table tournante, on alimente la table tournante d'une pluralité d'obturateurs.

En variante, on alimente cycliquement la table tournante.

A titre d'exemple, pour une cadence de 120 obturateurs par minute, on peut choisir d'alimenter la table tournante par une pluralité d'obturateurs toutes les 30 secondes.

Préférentiellement, les moyens de transfert sont initialement dans une position de référence qu'on oriente d'un angle de référence par rapport à leur position de référence lorsqu'ils comportent un nombre prédéfini d'obturateurs, d'autres moyens de transfert à remplir étant simultanément disposés dans ladite position de référence.

Afin d'assurer une cadence de travail définie et constante, il est avantageux de substituer des moyens de transfert comportant un nombre prédéfini d'obturateurs par d'autres moyens de transfert vides afin qu'ils puissent être alimentés.

A titre d'exemple, dès que toutes les alvéoles sont remplies par des obturateurs, le premier ensemble d'alvéoles pivote selon un angle de référence, par exemple 180°, afin qu'un second ensemble d'alvéoles vides puisse être disposé dans la position initiale de référence du premier ensemble d'alvéoles.

Avantageusement, la détection comprend une capture d'une image de chaque obturateur et une soumission de l'image à un algorithme de classification apte à sélectionner le format de l'obturateur parmi un ensemble de formats de référence possibles.

L'algorithme de classification peut être un classifieur ou un méta-classifieur apte à reconnaître le format d'un obturateur parmi une liste de formats de référence.

Si le format est nouveau, autrement dit, non compris dans la liste de formats de référence, un opérateur peut entraîner l'algorithme de classification à reconnaître ledit format en lui fournissant en entrée l'image de l'obturateur.

Autrement dit, il s'agit de localiser uniquement les obturateurs ayant un format spécifique défini par l'algorithme de reconnaissance d'image. Ces obturateurs sont distribués aux moyens de transfert.

Dans le cas contraire, les obturateurs continuent de circuler sur la table tournante tant que l'opérateur n'a pas mis à jour l'algorithme de reconnaissance d'image, de manière à reconnaître le format de ces obturateurs.

Selon un autre aspect, l'invention a pour objet un système automatisé de distribution d'obturateurs à des moyens de vissage et/ou bouchage, selon la revendication 7. Le système comprend des moyens de transfert, une table tournant, et des moyens d'alimentation aptes à alimenter une table tournante par une pluralité d'obturateurs.

Le système comprend :
- des moyens de détection aptes à détecter le format de chaque obturateur disposé sur la table tournante ;
- des moyens de préhension aptes à saisir chaque obturateur dont le format a été détecté et à le disposer dans des moyens de transfert aptes à transporter une pluralité d'obturateurs aux moyens de vissage et/ou bouchage.

Avantageusement, le système comprend des moyens d'orientation aptes à positionner les obturateurs disposés sur la table tournante selon un profil prédéfini.

De préférence, les moyens d'orientation comportent un peigne et une bavette disposés en regard.

Préférentiellement, les moyens d'alimentation sont aptes à alimenter la table tournante par une pluralité d'obturateurs, lorsque le nombre d'obturateurs, disposés sur au moins une surface de la table tournante, est inférieur à un seuil prédéterminé.

En variante, les moyens d'alimentation sont aptes à alimenter la table tournante par une pluralité d'obturateurs, lorsque la surface cumulée par les obturateurs disposés sur au moins une surface de la table tournante est inférieure à un seuil prédéterminé.

En variante, les moyens d'alimentation sont aptes à alimenter cycliquement la table tournante de la pluralité d'obturateurs.

Avantageusement, les moyens de transfert sont initialement dans une position de référence, le système comprenant des moyens de commande aptes à orienter les moyens de transfert d'un angle de référence par rapport à leur position de référence lorsqu'ils comportent un nombre prédéfini d'obturateurs, et disposer simultanément d'autres moyens de transfert à remplir dans une position de référence.

De préférence, le système comprend un module de calcul, et les moyens de détection comportent au moins une caméra apte à capturer une image d'un obturateur, et la soumettre au module de calcul apte à sélectionner, en exécutant un algorithme de classification, le format de l'obturateur parmi un ensemble de formats de référence possibles.

Préférentiellement, les moyens de préhension comportent une ventouse et un gabarit de centrage, ou une pince électrique ou pneumatique.

Avantageusement, les moyens d'alimentation comportent une trémie élévatrice et au moins un convoyeur aptes à coopérer avec la table tournante.

D'autres buts, caractéristiques et avantages de l'invention apparaîtront à la lecture de la description suivante, donnée uniquement à titre d'exemple non limitatif, et faite en référence aux dessins indexés sur lesquels :
[Fig 1] illustre schématiquement un système de distribution d'obturateurs automatisé selon un mode de réalisation de l'invention ;
[Fig 2] représente de manière schématique des moyens d'orientation d'obturateurs disposés sur une table tournante selon un mode de réalisation de l'invention et,
[Fig 3A]
[Fig 3B]

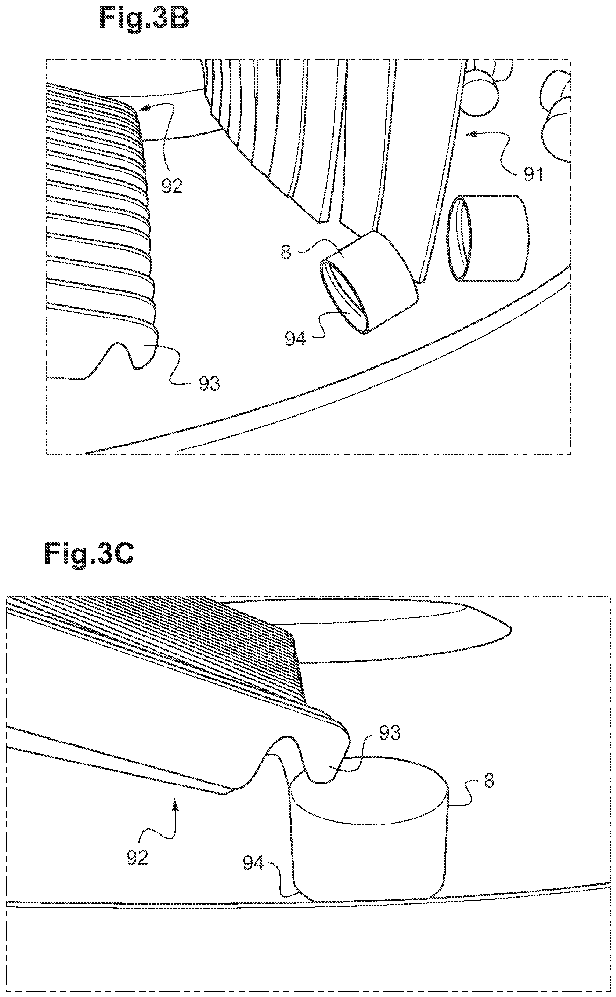

[Fig 3C] illustrent différents modes de mise en œuvre des moyens d'orientation.

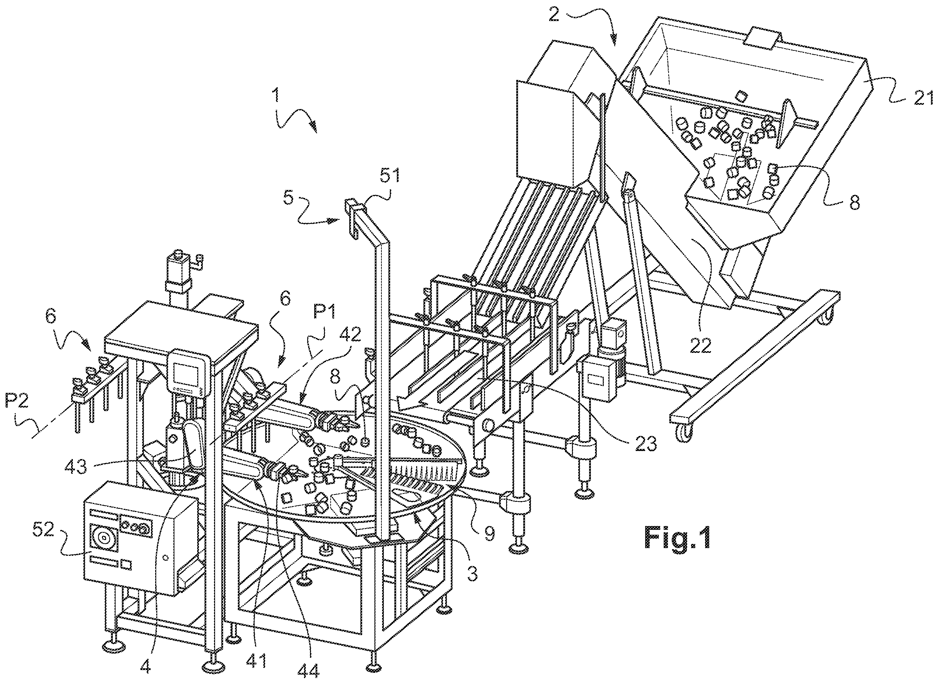

Sur la figure 1 est représenté un système de distribution d'obturateurs 8, désigné par la référence numérique générale 1.

Les obturateurs 8, par exemple des capsules ou des pompes, peuvent être sous différents formats ou sous un format unique.

Le système de distribution 1 est destiné à transporter les obturateurs 8 vers des moyens de vissage et/ou bouchage aptes à réaliser les opérations nécessaires à l'obtention d'un produit fini, par exemple un flacon rempli et obturé.

Pour ce faire, le système de distribution 1 comprend des moyens de transfert 6 aptes à transporter une pluralité d'obturateurs 8 aux moyens de vissage et/ou bouchage.

Pour alimenter les moyens de transfert 6 par une pluralité d'obturateurs 8, le système de distribution 1 comporte des moyens d'alimentation 2 aptes à transporter, suivant un parcours prédéterminé, les obturateurs 8 disposées dans des bacs 21.

Plus particulièrement, il s'agit d'une trémie élévatrice 22 et d'un convoyeur 23 apte à coopérer.

Le convoyeur 23 est ici linéaire, mais cela n'exclut pas l'utilisation de convoyeurs dont la forme suit un tracé géométrique différent.

Bien entendu, le convoyeur 23 peut être, non limitativement, à rouleaux, à pas de pèlerin ou à vis. Il s'agit de tout type de convoyeur apte à transporter des obturateurs.

Le système de distribution 1 comporte en outre une table tournante 3, apte à coopérer avec le convoyeur 23, et sur laquelle les obturateurs sont disposés en vrac et en excès, ce qui leur permet d'être présentés, autant de fois que nécessaire, à des moyens de préhension 4 disposés autour de la table tournante 3.

Autrement dit, les obturateurs 8 non saisis par les moyens de préhension 4 sur la table tournante 3 se présenteront de nouveau aux moyens de détection 5 grâce à la rotation de la table tournante 3.

Ainsi, les obturateurs 8 non saisis restent disposés sur la table tournante 3 jusqu'à leur saisie par les moyens de préhension 4.

La table tournante 3 permet donc d'éviter de recourir à des convoyeurs de recyclage comprenant par exemple d'autres convoyeurs afin de remettre de nouveau les obturateurs 8 dans la table tournante 3.

Par ailleurs, les moyens de préhension 4 comportent ici deux robots 41 et 42 aptes à saisir les obturateurs 8 et à les transporter aux moyens de transfert 6.

Chaque robot 41, 42 est constitué d'un actionneur 43 couplé à un effecteur 44 dont l'extrémité comporte une ventouse et un gabarit de centrage.

En variante, l'extrémité de l'effecteur 44 peut comporter une pince électrique ou pneumatique.

Comme chaque obturateur 8 peut avoir un format particulier. Il est avantageux de le détecter afin que l'effecteur 44 puisse l'appréhender.

Pour cela, le système de distribution 1 comprend des moyens de détection 5 aptes à détecter le format de chaque obturateur 8 disposé sur la table tournante 3.

Plus particulièrement, les moyens de détection 5 comportent au moins une caméra 51 apte à capturer une image d'un obturateur 8 circulant dans son champ de vision et la soumettre à un module de calcul 52.

Le module de calcul 52 peut être implémenté dans un microprocesseur ou un microcontrôleur.

Il est apte à exécuter un algorithme de classification pour sélectionner le format de l'obturateur 8 dont l'image lui a été soumise, parmi un ensemble de formats de référence possibles.

Si le format est nouveau, autrement dit non mémorisé dans une mémoire du module de calcul 52, un opérateur peut entraîner l'algorithme de classification ou de reconnaissance d'image à le reconnaître, en fournissant en entrée de l'algorithme, l'image de l'obturateur 8.

Par ailleurs, afin que les moyens de préhension 4 puissent saisir les obturateurs 8, il est avantageux qu'ils soient disposés sur la table tournante selon un profil déterminé en fonction de l'opération à effectuer tel qu'un vissage ou un bouchage.

Pour ce faire, le système de distribution 1 comprend des moyens d'orientation 9 aptes à orienter tous les obturateurs disposés en vrac dans la table tournante 3.

Les obturateurs 8 dont le format a été détecté et qui sont disposés selon ledit profil, seront donc saisis et disposés dans les moyens de transfert 6.

Plus particulièrement, les moyens de transfert 6 sont initialement dans une position de référence initiale P1, ici un ensemble d'alvéoles, chacune destinée à accueillir un obturateur 8 saisi par les moyens de préhension 4.

Dans cet exemple, lorsque toutes les alvéoles sont chargées d'obturateurs 8, des moyens de commande non représentés ici, orientent les moyens de transfert 6 d'un angle de référence, ici 180°, par rapport à sa position de référence initiale P1. L'ensemble d'alvéoles se retrouve ainsi dans la position P2.

Les moyens de commande disposent ensuite, lors de l'orientation de l'ensemble d'alvéoles de la position P1 à la position P2, un autre ensemble d'alvéoles vides aptes à être alimentées en obturateurs dans la position initiale de référence P1.

Il est à noter que les moyens de commande peuvent être implémentés dans le même microprocesseur ou microcontrôleur dans lequel le module de calcul 52 est intégré.

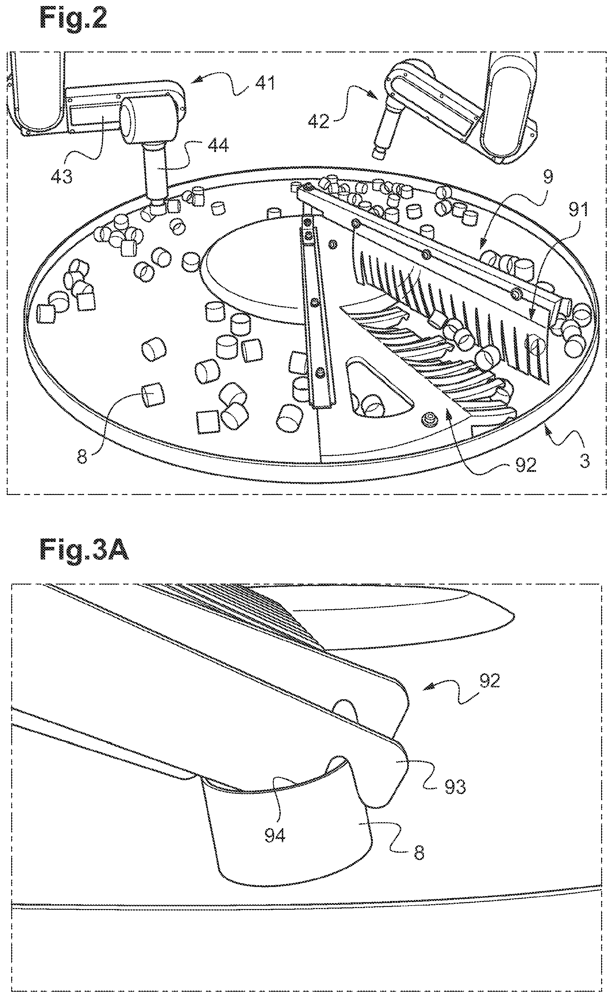

On se réfère maintenant à la figure 2, qui illustre un exemple de réalisation des moyens d'orientation 9.

Les moyens d'orientation 9 sont solidaires du bâti du système 1 de distribution d'obturateurs 8.

Plus particulièrement, la table tournante 3 est ici disposée autour des moyens d'orientation 9.

En variante, les moyens d'orientation 9 peuvent être situés à la périphérie de la table tournante 3.

Les moyens d'orientation 9 comportent une bavette 91 et un peigne 92 disposés en regard et aptes, en coopérant, d'orienter les obturateurs 8 selon le profil prédéterminé.

Lorsqu'il s'agit de visser un obturateur 8 sur un flacon, il est avantageux d'orienter selon ledit profil uniquement les obturateurs 8 qui sont disposés dans le sens inverse du vissage.

Le profil correspond ici à un obturateur 8 disposé sur la table tournante 3 dans le sens du vissage.

Par ailleurs, on entend par « peigne » tout objet solide comportant une pluralité de dents plus ou moins fines et serrées, utilisées pour agripper l'obturateur par sa partie creuse.

Ainsi, comme illustré dans la figure 3A, le peigne 92 comprend une pluralité de dents 93 aptes à accrocher l'obturateur 8 par sa partie creuse 94.

Tel qu'illustré dans la figure 3B, la dent 93 oriente l'obturateur 8 selon un premier angle de 90°.

L'obturateur 8 rentre ensuite en collision avec la bavette 91 apte à l'orienter selon un second angle de 90°.

Ainsi, en coopérant, le peigne 92 et la bavette 91 sont aptes d'orienter l'obturateur 8 d'un angle de 180° afin qu'il soit disposé dans le sens du vissage.

L'obturateur 8 ainsi disposé est apte à être saisi et transporté par les moyens de préhension 4 aux moyens de transfert 6.

Toutefois, tel qu'illustré dans la figure 3C, lorsque l'obturateur 8 est disposé dans le sens de vissage, la dent 93 ne peut l'agripper.

Par ailleurs, l'invention n'est pas limitée à ces modes de réalisation et de mise en œuvre mais en embrasse toutes les variantes dans les limites des revendications 1 et 7.

Par exemple, les moyens d'orientation correspondent à tout dispositif apte à orienter les obturateurs selon un profil prédéterminé sur une table tournante.

## Revendications

1. Procédé automatisé de distribution d'obturateurs (8) à des moyens de vissage et/ou bouchage, comprenant une alimentation d'une table tournante (3) par pluralité d'obturateurs (8) disposés sur la table tournante (3), **caractérisé en ce qu'**il comprend une détection du format de chaque obturateur (8) disposé sur la table tournante (3) et une préhension de chaque obturateur (8) dont le format a été détecté pour le distribuer à des moyens de transfert (6) aptes à transporter une pluralité d'obturateurs (8) aux moyens de vissage et/ou bouchage, la détection comprenant une capture d'une image de chaque obturateur (8), une soumission de l'image à un algorithme de classification (52) apte à sélectionner le format de l'obturateur (8) parmi un ensemble de formats de référence possibles.

2. Procédé selon la revendication 1, comprenant en outre une orientation des obturateurs (8) disposés sur la table tournante (3) selon un profil prédéfini.

3. Procédé selon la revendication 1 ou 2, dans lequel on alimente la table tournante (3) par la pluralité d'obturateurs (8) lorsque le nombre d'obturateurs (8), disposés sur au moins une surface de la table tournante (3), est inférieur à un seuil prédéterminé.

4. Procédé selon la revendication 1 ou 2, dans lequel on alimente la table tournante (3) par une pluralité d'obturateurs (8) lorsque la surface cumulée par les obturateurs (8) disposés sur au moins une surface de la table tournante (3) est inférieure à un seuil prédéterminé.

5. Procédé selon la revendication 1 ou 2, dans lequel on alimente cycliquement la table tournante (3).

6. Procédé selon l'une quelconque des revendications précédentes, dans lequel les moyens de transfert (6) sont initialement dans une position de référence (P1), et dans lequel on oriente les moyens de transfert (6) d'un angle de référence par rapport à leur position de référence (P1) lorsqu'ils comportent un nombre prédéfini d'obturateurs (8), d'autres moyens de transfert (6) à remplir étant simultanément disposés dans ladite position de référence (P1).

7. Système de distribution d'obturateurs automatisé (1) à des moyens de
vissage et/ou bouchage, comprenant des moyens de transfert, une table tournante, et des moyens d'alimentation (2) aptes à alimenter une table tournante (3) par une pluralité d'obturateurs (8), **caractérisé en ce qu'**il comprend :
- des moyens de détection (5) aptes à détecter le format de chaque obturateur (8) disposé sur la table tournante (3) et,
- des moyens de préhension (4) aptes à saisir chaque obturateur (8) dont le format a été détecté et à le disposer dans des moyens de transfert (6) aptes à transporter une pluralité d'obturateurs (8) aux moyens de stockage,
- un module de calcul (52),
et dans lequel les moyens de détection (5) comportent au moins une caméra (51) apte à capturer une image d'un obturateur (8), la soumettre au module de calcul (52) apte à sélectionner, en exécutant un algorithme de classification, le format de l'obturateur (8) parmi un ensemble de formats de référence possibles.

8. Système selon la revendication 7, comprenant des moyens d'orientation (9) aptes à positionner les obturateurs (8) disposés sur la table tournante (3) selon un profil prédéfini.

9. Système selon la revendication 8, dans lequel les moyens d'orientation (9) comportent un peigne (92) et une bavette (91) disposés en regard.

10. Système selon l'une quelconque des revendications 7 à 9, dans lequel les moyens d'alimentation (2) sont aptes à alimenter la table tournante (3) lorsque le nombre d'obturateurs (8), disposés sur au moins une surface de la table tournante (3), est inférieur à un seuil prédéterminé.

11. Système selon l'une quelconque des revendications 7 à 9, dans lequel les moyens d'alimentation (2) sont aptes à alimenter la table tournante (3) par une pluralité d'obturateurs (8), lorsque la surface cumulée par les obturateurs (8) disposés sur au moins une surface de la table tournante (3), est inférieure à un seuil déterminé.

12. Système selon l'une quelconque des revendications 7 à 9, dans lequel les moyens d'alimentation (2) sont aptes à alimenter cycliquement la table tournante (3) de la pluralité d'obturateurs (8).

13. Système selon l'une quelconque des revendications 7 à 12, dans lequel les moyens de transfert (6) sont initialement dans une position de référence (P1), le système (1) comprenant des moyens de commande aptes à orienter les moyens de transfert (6) d'un angle de référence par rapport à leur position de référence (P1) lorsqu'ils comportent un nombre prédéfini d'obturateurs (8), et disposer simultanément d'autres moyens de transfert (6) à remplir dans la position de référence (P1).

14. Système selon l'une quelconque des revendications 7 à 13, dans lequel les moyens de préhension (4) comportent une ventouse et un gabarit de centrage, ou une pince pneumatique ou électrique.

15. Système selon l'une quelconque des revendications 7 à 14, dans lequel les moyens d'alimentation (2) comportent une trémie élévatrice (22) et au moins un convoyeur (23) aptes à coopérer avec la table tournante (3).

## Patentansprüche

1. Automatisiertes Verfahren zum Verteilen von Verschlusskappen (8) an Schraub- und/oder Verschlussmittel, umfassend das Versorgen eines Drehtischs (3) mit einer Vielzahl von auf dem Drehtisch (3) angeordneten Verschlusskappen (8), **dadurch gekennzeichnet, dass** es das Erkennen des Formats jeder auf dem Drehtisch (3) angeordneten Verschlusskappe (8) und das Greifen jeder Verschlusskappe (8) umfasst, dessen Format erkannt wurde, um es an Transfermittel (6) zu verteilen, die geeignet sind, eine Vielzahl von Verschlusskappen (8) an Schraub- und/oder Verschlussmittel zu transportieren, wobei das Erkennen das Erfassen eines Bildes jeder Verschlusskappe (8) sowie das Anwenden eines Klassifizierungsalgorithmus (52) auf das Bild umfasst, der geeignet ist, das Format der Verschlusskappe (8) aus einer Reihe möglicher Referenzformate auszuwählen.

2. Verfahren nach Anspruch 1, ferner umfassend eine Ausrichtung der auf dem Drehtisch (3) angeordneten Verschlusskappen (8) nach einem vordefinierten Profil.

3. Verfahren nach Anspruch 1 oder 2, wobei der Drehtisch (3) mit der Vielzahl von Verschlusskappen (8) versorgt wird, wenn die Anzahl der Verschlusskappen (8), die auf mindestens einer Oberfläche des Drehtischs (3) angeordnet sind, unter einem vorbestimmten Schwellenwert liegt.

4. Verfahren nach Anspruch 1 oder 2, wobei der Drehtisch (3) mit der Vielzahl von Verschlusskappen (8) versorgt wird, wenn die kumulative Fläche der auf mindestens einer Oberfläche des Drehtischs (3) angeordneten Verschlusskappen (8) unter einem vorbestimmten Schwellenwert liegt.

5. Verfahren nach Anspruch 1 oder 2, wobei der Drehtisch (3) zyklisch versorgt wird.

6. Verfahren nach einem der vorhergehenden Ansprüche, wobei sich die Transfermittel (6) zunächst in einer Referenzposition (P1) befinden, und wobei die Transfermittel (6) um einen Referenzwinkel in Bezug auf ihre Referenzposition (P1) ausgerichtet werden, wenn sie eine vordefinierte Anzahl an Verschlusskappen (8) aufweisen, wobei gleichzeitig andere zu füllende Transfermittel (6) in der Referenzposition (P1) angeordnet sind.

7. Automatisiertes Verteilsystem (1) für Verschlusskappen zum Verschrauben und/oder Verschließen, umfassend Transfermittel, einen Drehtisch und Versorgungsmittel (2), die geeignet sind, einen Drehtisch (3) mit einer Vielzahl von Verschlusskappen (8) zu versorgen, **dadurch gekennzeichnet, dass** es umfasst:
- Erkennungsmittel (5), die geeignet sind, das Format jeder auf dem Drehtisch (3) angeordneten Verschlusskappe (8) zu erkennen, und
- Greifmittel (4), die geeignet sind, jede Verschlusskappe (8), deren Format erkannt wurde, zu greifen und ihn in Transfermitteln (6) anzuordnen, die geeignet sind, eine Vielzahl von Verschlusskappen (8) zu den Lagermitteln zu transportieren,
- ein Berechnungsmodul (52),
und wobei die Erkennungsmittel (5) mindestens eine Kamera (51) aufweisen, die geeignet ist, ein Bild einer Verschlusskappe (8) zu erfassen, diese dem Berechnungsmodul (52) zu übermitteln, das geeignet ist, durch Ausführen eines Klassifizierungsalgorithmus das Format der Verschlusskappe (8) aus einer Reihe möglicher Referenzformate auszuwählen.

8. System nach Anspruch 7, umfassend Ausrichtungsmittel (9), die geeignet sind, die auf dem Drehtisch (3) angeordneten Verschlusskappen (8) nach einem vordefinierten Profil zu positionieren.

9. System nach Anspruch 8, wobei die Ausrichtungsmittel (9) eine Kammschiene (92) und einen Abdeckstreifen (91) aufweisen, die einander gegenüberliegend angeordnet sind.

10. System nach einem der Ansprüche 7 bis 9, wobei die Versorgungsmittel (2) geeignet sind, den Drehtisch (3) zu versorgen, wenn die Anzahl der auf mindestens einer Oberfläche des Drehtischs (3) angeordneten Verschlusskappen (8) unter einem vorbestimmten Schwellenwert liegt.

11. System nach einem der Ansprüche 7 bis 9, wobei die Versorgungsmittel (2) geeignet sind, den Drehtisch (3) mit einer Vielzahl von Verschlusskappen (8) zu versorgen, wenn die kumulative Fläche der auf mindestens einer Oberfläche des Drehtischs (3) angeordneten Verschlusskappen (8) unter einem bestimmten Schwellenwert liegt.

12. System nach einem der Ansprüche 7 bis 9, wobei die Versorgungsmittel (2) geeignet sind, den Drehtisch (3) der Vielzahl von Verschlusskappen (8) zyklisch zu versorgen.

13. System nach einem der Ansprüche 7 bis 12, wobei sich die Transfermittel (6) zunächst in einer Referenzposition (P1) befinden, wobei das System (1) Steuermittel umfasst, die geeignet sind, die Transfermittel (6) um einen Referenzwinkel in Bezug auf ihre Referenzposition (P1) auszurichten, wenn sie eine vordefinierte Anzahl an Verschlusskappen (8) aufweisen, und gleichzeitig andere zu füllende Transfermittel (6) in der Referenzposition (P1) anzuordnen.

14. System nach einem der Ansprüche 7 bis 13, wobei die Greifmittel (4) einen Sauger und eine Zentrierlehre oder eine pneumatische bzw. elektrische Greifzange aufweisen.

15. System nach einem der Ansprüche 7 bis 14, wobei die Versorgungsmittel (2) einen Hubtrichter (22) und mindestens einen Förderer (23) aufweisen, die geeignet sind, mit dem Drehtisch (3) zusammenzuwirken.

## Claims

1. Automated method for dispensing plugs (8) to screwing and/or sealing means, comprising supplying a turntable (3) with a plurality of plugs (8) disposed on the turntable (3), **characterised in that** it comprises detecting the format of each plug (8) disposed on the turntable (3) and gripping each plug (8) whose format has been detected for dispensing it to transfer means (6) capable of transporting a plurality of plugs (8) to the screwing and/or plugging means, detecting comprising capturing an image of each plug (8), subjecting the image to a classification algorithm (52) capable of selecting the format of the plug (8) from a set of possible reference formats.

2. Method according to claim 1, further comprising orienting the plugs (8) disposed on the turntable (3) according to a predefined profile.

3. Method according to claim 1 or 2, wherein the turntable (3) is supplied with the plurality of plugs (8) when the number of plugs (8), disposed on at least one surface of the turntable (3), is less than a predetermined threshold.

4. Method according to claim 1 or 2, wherein the turntable (3) is supplied with a plurality of plugs (8) when the cumulative surface area occupied by the plugs (8) disposed on at least one surface of the turntable (3) is less than a predetermined threshold.

5. Method according to claim 1 or 2, wherein the turntable (3) is cyclically supplied.

6. Method according to any one of the preceding claims, wherein the transfer means (6) are initially in a reference position (P1), and wherein the transfer means (6) are oriented by a reference angle relative to their reference position (P1) when they include a predefined number of plugs (8), other transfer means (6) to be filled being simultaneously disposed in said reference position (P1).

7. Automated system (1) for dispensing plugs to screwing and/or sealing means, comprising transfer means, a turntable, and supply means (2) capable of supplying a turntable (3) with a plurality of plugs (8), **characterised in that** it comprises:
- detection means (5) capable of detecting the format of each plug (8) disposed on the turntable (3) and,
- gripping means (4) capable of gripping each plug (8) whose format has been detected and disposing it in transfer means (6) capable of transporting a plurality of plugs (8) to the storage means,
- a calculation module (52),
and wherein the detection means (5) include at least one camera (51) capable of capturing an image of a plug (8), subjecting it to the calculation module (52) capable of selecting, by executing a classification algorithm, the format of the plug (8) from a set of possible reference formats.

8. System according to claim 7, comprising orientation means (9) capable of positioning the plugs (8) disposed on the turntable (3) according to a predefined profile.

9. System according to claim 8, wherein the orientation means (9) include a comb (92) and a nose plate (91) facing each other.

10. System according to any one of claims 7 to 9, wherein the supply means (2) are capable of supplying the turntable (3) when the number of plugs (8), disposed on at least one surface of the turntable (3), is less than a predetermined threshold.

11. System according to any one of claims 7 to 9, wherein the supply means (2) are capable of supplying the turntable (3) with a plurality of plugs (8), when the cumulative surface area occupied by the plugs (8) disposed on at least one surface of the turntable (3) is less than a determined threshold.

12. System according to any one of claims 7 to 9, wherein the supply means (2) are capable of cyclically supplying the turntable (3) with the plurality of plugs (8).

13. System according to any one of claims 7 to 12, wherein the transfer means (6) are initially in a reference position (P1), the system (1) comprising control means capable of orienting the transfer means (6) by a reference angle relative to their reference position (P1) when they include a predefined number of plugs (8), and simultaneously disposing other transfer means (6) to be filled in the reference position (P1).

14. System according to any one of claims 7 to 13, wherein the gripping means (4) include a suction cup and a centring jig, or pneumatic or electric pliers.

15. System according to any one of claims 7 to 14, wherein the supply means (2) include a loading hopper (22) and at least one conveyor (23) capable of cooperating with the turntable (3).
